# EUROPEAN PATENT APPLICATION

(11) **EP 3 339 749 A1**
(43) Date of publication of application: **27.06.2018**
(21) Application number: 17208172.1
(22) Date of filing: 18.12.2017
(51) Int. Cl.: F24D 3/08, F24D 17/00, F24D 19/10

(54) **SYSTEM FOR HEATING AND COOLING ROOMS**

(30) Priority: 23.12.2016 IT 201600130863
(71) Applicant: Lo Bartolo, Davide, 20021 Bollate MI (IT)
(72) Inventor: MANFROI, Giovanni, 32020 CENCENIGHE AGORDINO BL (IT); MAISTRELLO, Mario, 17100 SAVONA (IT)
(74) Representative: Modiano, Micaela Nadia

(57) **Abstract**

A system (100) for heating and cooling rooms that comprises a boiler (16) of the condensation type, which is provided with a gas/water heat exchanger, in summer operating conditions, by way of a fan (14), cooling air is sent onto the gas/water heat exchanger contained in the condensation boiler (16) with the objective of cooling the cooling water to be sent to radiators that in summer, therefore, operate as cooling elements, furthermore, in order to further cool the working liquid (water) of the system it is possible to spray atomized water onto the heat exchanger by way of spray nozzles (8).

## Description

The present invention relates to a system for cooling rooms in summer.

As is known, currently many buildings are fitted with an autonomous heating system for hot water.

A traditional heating system comprises a boiler (usually running on methane or LPG), a plurality of radiators installed in the various rooms to be heated, and a plurality of water pipes that connect using hydraulic means both the boiler with the radiators and, optionally, the radiators to each other.

Thus the inventive idea arose of using a typical heating system for hot water both for heating the rooms in winter and for cooling them in summer, adopting substantially the same components.

In other words, the present invention relates to a system for the winter heating and the summer cooling of a room of the type with very low temperature and adapted to be used in buildings that are already provided with a radiator heating system of the conventional type.

The present system comprises contrivances that can be inserted into existing heating systems and which furthermore make summer cooling possible, in a simple and non-invasive manner, even in systems that are not adapted as is the case with the radiator systems.

In this type of system, in fact, the major problem is that in summer it is not possible to supply the radiators proper with low-temperature fluids, in that this would cause the formation of surface condensation, not just on the terminals in the room (radiators), but also on the pipes belonging to the main distribution network, which usually are poorly, or not at all, insulated and which therefore would cause the accumulation of water inside the masonry of the building and also cause the premature oxidation of the joints and of the pipes.

As noted previously, in winter the boiler used in the system that is the subject matter of the invention operates as it does traditionally, using the energy contained in the fuel to generate the heat necessary to heat the rooms.

In summer, the stream of air that flows over the exchanger is maintained, and circulating inside the exchanger is the fluid that supplies the terminals inside the building.

This condition makes it possible to dissipate heat into the outside environment, through the flue which in winter is used to expel the exhaust gases.

Optionally an ultrasound atomizer or a medium-pressure jet injects atomized water into the combustion chamber of the boiler proper, for reasons that will be better explained below.

In summer, this makes it possible to considerably increase the heat dissipation capacity, effectively converting the boiler into a small evaporation cooling tower adapted for a single building unit.

Present-day boilers, which are now all of the condensation type, are not affected negatively by the presence of water, precisely because during their normal winter operation water is indeed always present inside them, water generated by the low-temperature combustion and corresponding condensation (hence the name of this type of boiler) of part of the fumes generated by the combustion.

This value is about equal to 160 g per kWh of generated heat energy. In the present invention, the cold boiler, with the same quantity of water, can dissipate heat equal to about 0.11 kWh, or about 1/10 of the overall winter power. Considering that the typical size of single-family boilers is between 24 and 35 kW, the power of this invention is comprised between 2.5 and 3.5 kW, without modifying any characteristic part of the boiler.

According to the present invention, therefore, a system for heating/cooling rooms is provided according to claim 1.

For better comprehension of the present invention, a description will now be given of a preferred embodiment, purely by way of non-limiting example and with reference to the accompanying drawings, wherein:
- Figure 1 schematically illustrates the conditions of use of a system provided according to the present invention during winter and in the "room heating" mode only;
- Figure 2 schematically illustrates the conditions of use of a system provided according to the present invention during winter and in the "domestic water heating" mode only;
- Figure 3 schematically illustrates the conditions of use of a system provided according to the present invention during summer and in the "room cooling" mode only;
- Figure 4 schematically illustrates the conditions of use of a system provided according to the present invention during summer and in the "recovering heat for domestic hot water" mode only;
- Figure 5 schematically illustrates the conditions of use of a system provided according to the present invention during summer and in the double "room cooling" and "recovering heat for domestic hot water" mode; and

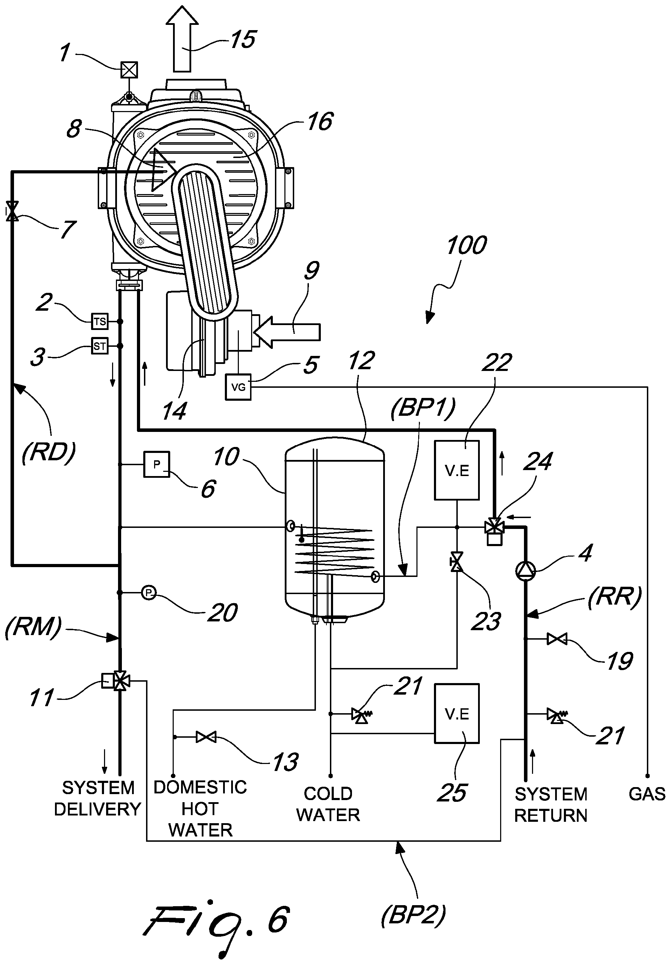

- Figure 6 schematically illustrates the conditions of use of a system provided according to the present invention during summer and in the double "room cooling" and "recovering heat for domestic hot water" mode, with the further use of evaporating nozzles with condensate discharge.

In the accompanying figures, the reference numeral 100 generally designates a heating/cooling system provided according to the teachings of the present invention.

In the various descriptions of the operation we will refer to the following elements that make up the heating/cooling system 100:
1. Boiler venting valve
2. Safety thermostat
3. Boiler temperature sensor
4. Boiler circulation pump
5. Gas valve
6. Pressure switch
7. Summer humidification valve
8. Spray nozzle
9. External air intake fan
10. Domestic water temperature sensor
11. ON/OFF three-way valve (domestic water priority valve)
12. Domestic water heater
13. Domestic hot water discharge for cooling
14. Fan
15. Expulsion of air/burnt gases
16. Boiler with combustion/heat exchange chamber
19. Boiler drainage spigot
20. Boiler gauge
21. Safety valve
22. Boiler expansion vessel
23. System filling spigot
24. Modulating three-way valve
25. Domestic hot water expansion vessel

The system 100 is completed by:
- a water delivery branch RM to deliver water from the boiler 16 to at least one user element;
- a water return branch RR to allow water to return from at least one user element to the boiler 16;
- a first bypass branch BP1 (which comprises the modulating three-way valve 24) between the delivery branch RM and the return branch RR;
- a second bypass branch BP2 (which comprises the ON/OFF three-way valve 11) between the delivery branch RM and the return branch RR;
- a deflection branch (RD) in order to send atomized water to the boiler 16.

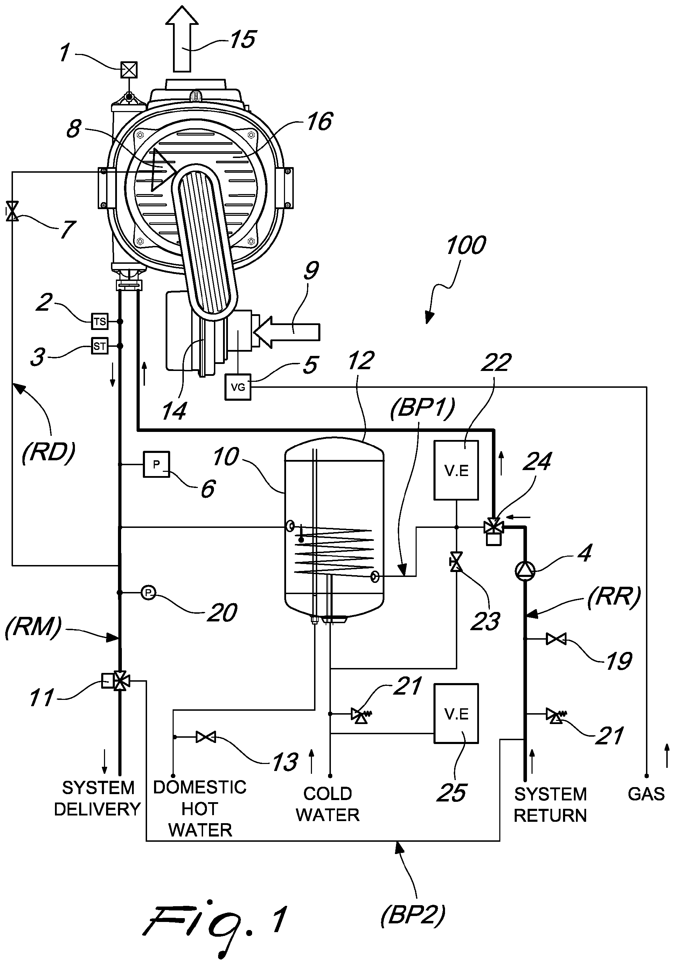

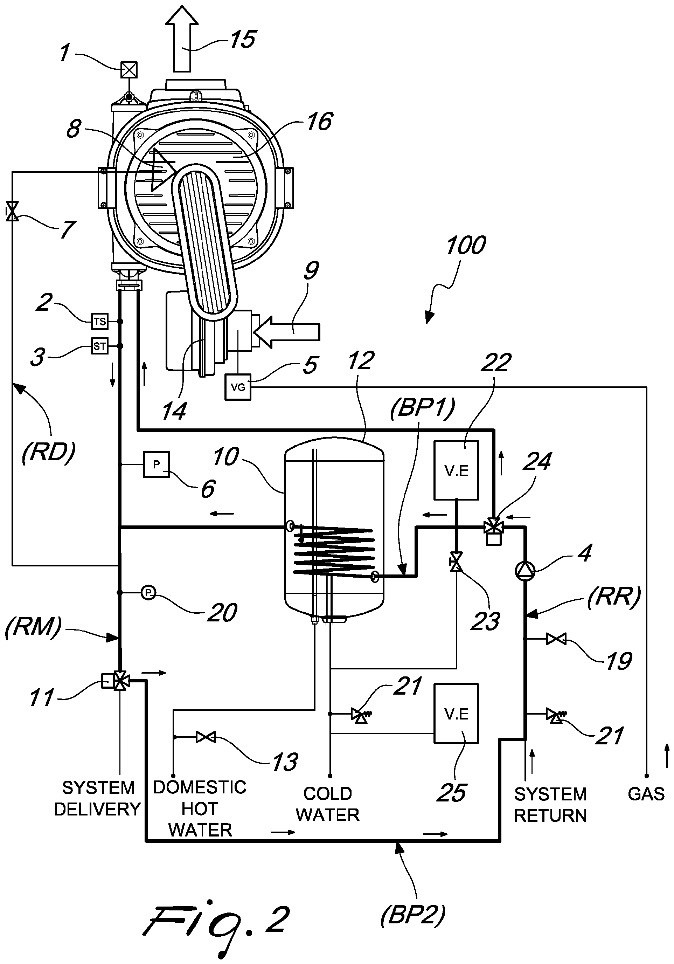

The winter operation of the system 100 will now be described with reference to Figures 1, 2.

An ON/OFF three-way valve 11, entirely similar to a normal valve used for this system, enables the production of domestic hot water in winter (Figure 2).

If the production of domestic hot water is not necessary, the ON/OFF three-way valve 11 will send to the system the water that is heated in the boiler 16 to the temperature required by the radiators (which are not shown).

The combustion air 9 is blown by way of a fan 14 and mixed with a suitable quantity of gas by way of a mixing valve 5 and sent to the combustion chamber of the boiler 16.

In a conventional manner, the gases produced by the combustion are expelled by way of a flue 15.

In winter, a modulating three-way valve 24 is in the configuration that connects the system return with the boiler 16.

If a sensor 10 accommodated in the domestic water heater 12 detects a temperature that is too low, the system actuates the ON/OFF three-way valve 11. A temperature sensor 3 effectively triggers the fan 14 and the combustion of the air/gas mixture begins in the boiler 16.

Up to now the system 100 has been used as a normal combined system for the production of hot water for room heating and of domestic hot water.

In summer, on the other hand, the same system 100 can be used as a system for cooling the rooms and optionally for producing domestic hot water.

In summer the water returning to the system is at a high temperature (typically 50°-55°C).

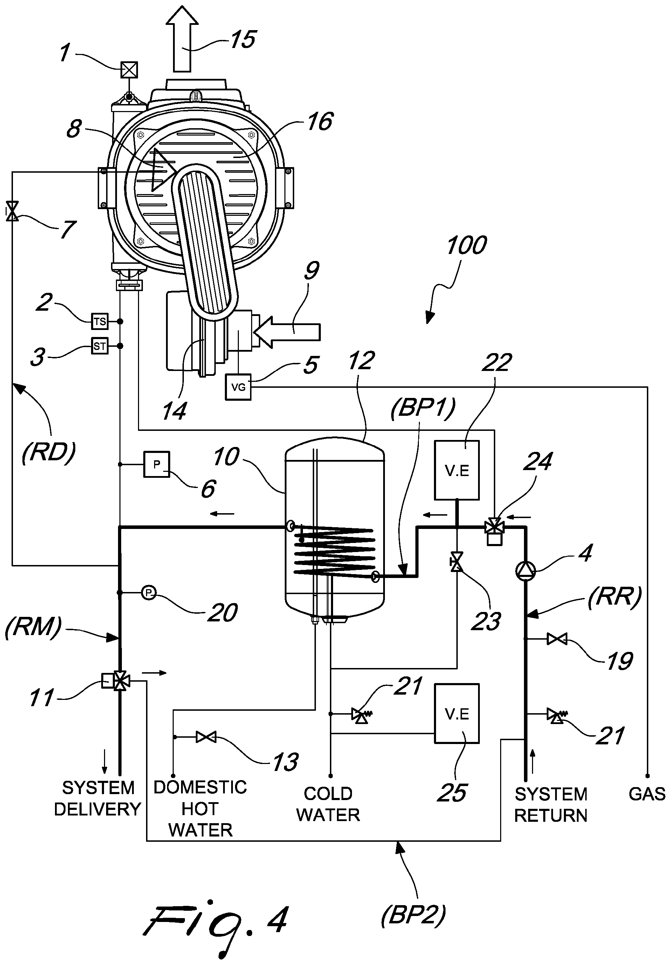

As shown in Figure 4, the valve 24 is opened so as to send the water to the domestic water heater 12, until the desired temperature value (typically 50°C), measured by the sensor 10, is reached inside it.

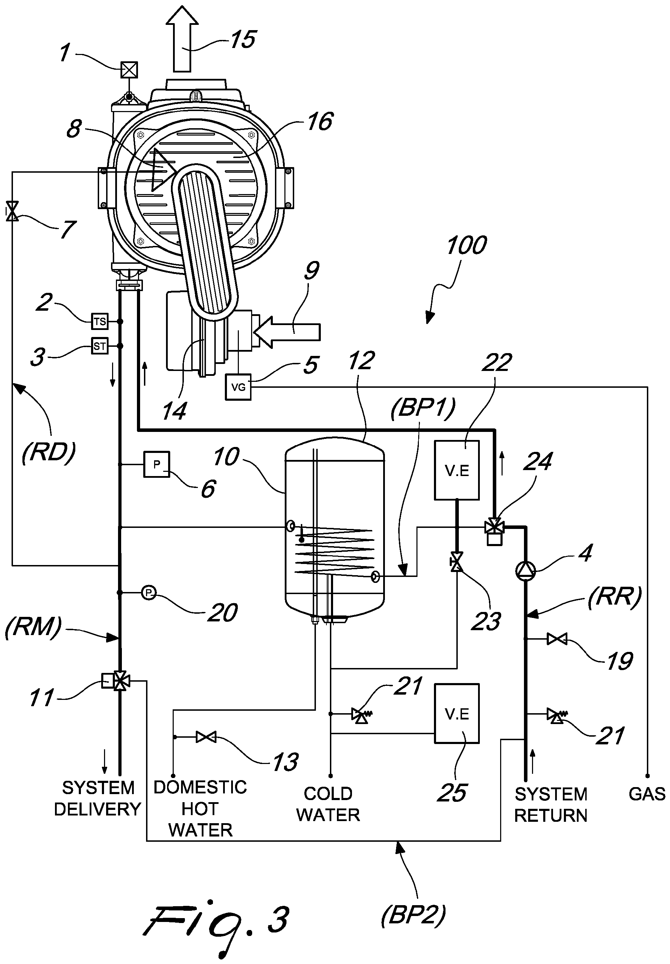

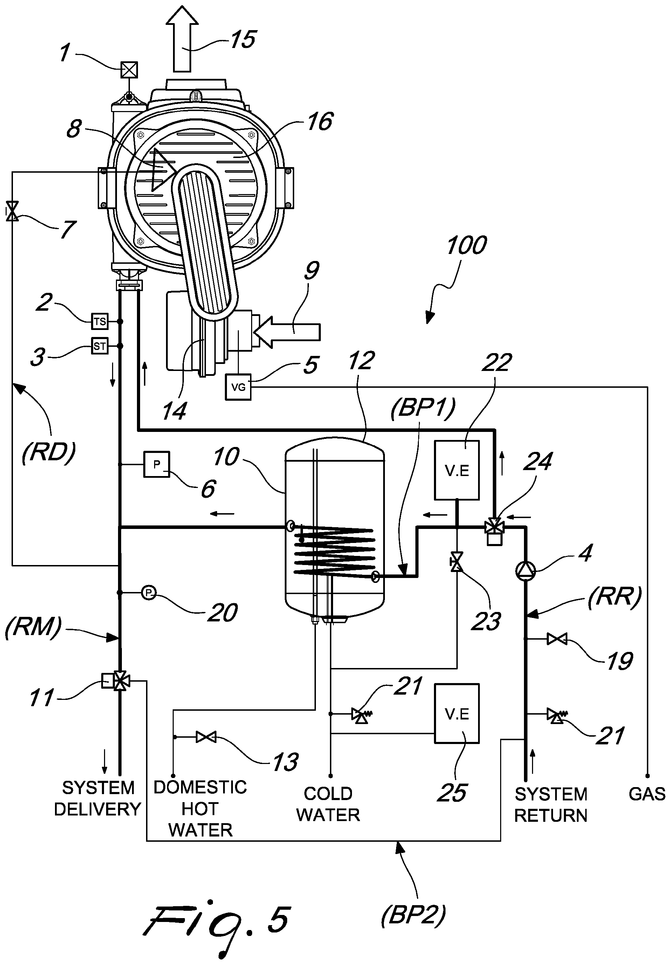

At this point the valve 24 is switched so that the water is sent to the gas/water heat exchanger belonging to the boiler 16 (Figures 3, 5).

The fan 14 is actuated at its maximum speed and sucks air in from outside 9, using it to cool the water in transit in the gas/water heat exchanger of the boiler 16.

If a sensor 3 arranged on the delivery branch RM detects an acceptable value (indicatively lower than 40°C) then the relatively cold water is sent to the system and to the radiators, which, in this case, function as cooling elements.

If the pressure switch 6 (also accommodated in the delivery branch RM) detects a value that is too high (2bar) in the delivery branch RM, a valve 7 opens in a deflection branch RD and a portion of the water is sprayed inside the boiler 16 onto the gas (air)/water heat exchanger by way of a spray nozzle 8, contributing to the cooling of the working liquid that flows in the gas (air)/water heat exchanger.

Owing to the atomization of the water, a portion of it evaporates, thus subtracting heat from the air (originating from the air intake 9), and therefore also from the working liquid that flows in the gas (air)/water heat exchanger.

If the sensor 3 still detects a temperature that is too high, similarly to what is described above, the atomizing valve 7 opens and a system filling valve or spigot 23 also opens in order to allow the water to be topped up until the correct pressure of the system is restored. The valve 23 can be a valve operated electrically by a governor or simply an automatic top-up valve, a component normally used in thermal engineering.

If the temperature values recorded by the sensor 3 are still high, the valve 13 opens, creating a dummy consumption of domestic hot water and the valve 24 opens, allowing the water of the system to exchange with the domestic water heater 12 until the sensor 10 detects a value lower than 35°C.

At this point the valve 13 closes, and the cycle proceeds as described earlier.

The domestic water heater 12 is of the accumulation type, with a capacity equal to or exceeding 5 liters.

In summer, this system enables a total recovery of heat from the production of cold for cooling the rooms, using terminals of the water loop type or the like in the rooms and reusing much of the existing network.

The principal advantage of the system in the present invention consists substantially on the fact that with simple contrivances it is possible to convert a boiler heating system to a cooling machine, which, however, at the same time can ensure a certain production of domestic hot water.

In other words, in the present invention the gas/water heat exchanger present in the condensing boiler is used as if it were an evaporation cooling tower for cooling the recirculated water.

The disclosures in Italian Patent Application No. 102016000130863 (UA2016A009484) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system (100) for heating and cooling rooms;
said system (100) comprising at least one boiler (16) which is provided with at least one gas/water heat exchanger;
at least one water delivery branch (RM) to deliver water from said boiler (16) to at least one user element;
at least one water return branch (RR) to allow water to return from said at least one user element to said boiler (16);
a first bypass branch (BP1) between said at least one delivery branch (RM) and said at least one return branch (RR); said first bypass branch (BP1) comprising a domestic water heater (12) for obtaining domestic hot water and a modulating three-way valve (24);
the system (100) being **characterized in that**, in summer operating conditions, ventilation means (14) send cooling air onto said at least one gas/water heat exchanger contained in said boiler (16) in order to cool the cooling water to be sent to said at least one user element.

2. The system (100) according to claim 1, **characterized in that** it comprises a deflection branch (RD) in order to spray cooling water onto said gas/water heat exchanger contained in said boiler (16) with the objective of improving the process of cooling the recirculation water in transit through said gas/water heat exchanger.

3. The system (100) according to claim 2, **characterized in that** said deflection branch (RD) is provided with a summer humidification valve (7).

4. The system (100) according to claim 3, **characterized in that** said deflection branch (RD) is provided with spraying means (8).

5. The system (100) according to claim 4, **characterized in that**, if the temperature values detected by a first sensor (3) arranged on said at least one delivery branch (RM) are still high, a valve (13) opens, thus creating a dummy consumption of domestic hot water, and said modulating three-way valve (24) also opens in order to allow the water of the system to exchange with the domestic water heater (12) until a second sensor (10), arranged inside said domestic water heater (12), detects a value below a certain predetermined threshold.

6. The system (100) according to one or more of the preceding claims, **characterized in that** it comprises a second bypass branch (BP2), which is also arranged between said at least one delivery branch (RM) and said at least one return branch (RR).

7. The system (100) according to claim 6, **characterized in that** said second bypass branch (BP2) is provided with an ON/OFF three-way valve (11).

8. The system (100) according to one or more of the preceding claims, **characterized in that**, during the summer, said modulating three-way valve (24) is opened so as to send water to the domestic water heater (12), until a desired value is reached inside it.

9. The system (100) according to one or more of the preceding claims, **characterized in that** said at least one boiler (16) is at least one condensing boiler.

10. The system (100) according to one or more of the preceding claims, **characterized in that** said at least one boiler (16), during the summer, is apt to work as an evaporation cooling tower.
